(19) Europäisches Patentamt
European Patent Office
Office européen des brevets

(11) **EP 3 862 925 A1**

(12) **EUROPEAN PATENT APPLICATION**

(43) Date of publication:
**11.08.2021 Bulletin 2021/32**

(51) Int Cl.:
*G06N 3/04* (2006.01)          *G06N 3/08* (2006.01)

(21) Application number: **20155675.0**

(22) Date of filing: **05.02.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Robert Bosch GmbH
70442 Stuttgart (DE)**

(72) Inventor: **Munoz Delgado, Andres Mauricio
71263 Weil Der Stadt (DE)**

(54) **DETERMINING A MASK FOR EXPLAINING A CLASSIFICATION**

(57)    The invention relates to a computer-implemented method (400) of determining a mask for explaining a classification of an input instance to a trained classifier. The mask indicates features of the input instance at a layer of the trained classifier for explaining the classification. The mask is updated in multiple outer iterations by updating the mask from a current mask to an updated mask. To this end, an additional mask is determined in an inner optimization. The inner optimization is configured to avoid indicating features already indicated by the current mask.

Fig. 3

## Description

## FIELD OF THE INVENTION

The invention relates to a computer-implemented method of determining a mask for explaining a classification of an input instance to a trained classifier, and to a corresponding system. The invention further relates to a computer-readable medium comprising instructions to perform the above method.

## BACKGROUND OF THE INVENTION

Machine-learned ('trained') classifiers, also known as classification models, are widely used in many real-life application domains, such as autonomous driving, robotics, manufacturing, building control, etc. For example, machine learnable classifiers such as neural network classifiers may be trained to classify a state of a physical system, such as an autonomous vehicle or a robot, etc., or the system's environment, e.g., the road on which the vehicle is travelling, the robot's workspace, etc., based on sensor data which is acquired by one or more sensors. Such a state may be classified into two or more classes, for example, "safe" or "unsafe"; "OK" or "not OK"; "cat", "dog", or "tree", etcetera. Having classified the state, the physical system may be controlled, e.g., using one or more actuators, or its operation may be monitored.

Generally, as is known in machine learning, a machine-learnable classifier such as a neural network classifier may be trained on training data in order to provide a classification. By training the classifier, the classifier may provide such a classification without being explicitly programmed on how to do so. For example, for classifying an image, the classifier may be trained on a training dataset comprising images whose classifications are known. For example, a classifier may be trained as a multiclass identifier, by which an image may be classified as, e.g., "cat", "dog", or "tree". Another example is that the trained classifier may be trained to be a binary classifier, e.g. classifying an input instance into one of only two complementary categories, "OK" or "NOK". However, the trained classifier may also be trained on a dataset of instances with unknown categories, e.g. by clustering/automatic classification.

In general, neural network classifiers may comprise deep neural networks and/or convolutional neural networks (CNNs). The classifications by machine learned models such as trained neural networks may be used in myriad applications, e.g., optical quality inspection in manufacturing processes, or hazard detection in autonomous vehicles. It will be understood that in these and other application domains, it is relevant to know and understand how a machine learned model arrives at its conclusion.

Therefore, explainability is a core element of both model verification (did we build the model right?) and validation (did we build the right model?). It is a well-known finding that large, state-of-the-art network models can be easily tricked into providing false, high confidence predictions; and as a consequence, their true generalization performance has often been called into question. As with any other software component intended for deployment in the field, it is critical that the models can be quantitatively verified and validated, e.g. to establish the degree to which a model has learned the desired input-to-output relationship. Current state-of-the-art techniques in machine and deep learning lack metrics and practices to measure this effect, often working with limited, and thus inherently biased, datasets, and producing models that are overparametrized in comparison to the amount of data available. Thus, there is often a wide gap between what a model has actually learned and what the implementer thinks the model has learned.

Over the past several years, the need for providing explanations along with model predictions has been recognised, and several approaches have been proposed and used at an academic level with varying degrees of success. In the context of image classification networks, for example, most explanation methods are a mix of black-box, e.g., model-independent, methods, and white-box methods. Such methods compute attributions on the pixels of the input image. That is, these methods study the local behaviour of the classifier on a given input. These attribution maps are also often called explainability, saliency or attention masks (or maps) and are frequently represented as heatmaps overlaid on the input image, in which areas of the input image that cause the model to classify the input as one class or another are highlighted.

In "Interpretable explanations of black boxes by meaningful perturbation" by R. Fong and A. Vedaldi (available at https://arxiv.org/pdf/1704.03296 and incorporated herein by reference), an explainability technique is presented in which the model is treated as a black box. An optimization process is used in order to learn a meaningful mask over the input image that forces the classifier to classify its input differently. In particular, a "deletion game" is defined in which the goal is to find the smallest deletion mask that causes the classification of the input image to drop significantly. Also, a "preservation game" is defined in which the goal is to find the smallest subset of the image that, when retained, preserves the classification score of the image.

## SUMMARY OF THE INVENTION

In accordance with a first aspect of the invention, a computer-implemented method of determining a mask for explaining a classification of an input instance to a trained classifier is provided, as defined by claim 1. In accordance with a further aspect of the invention, a corresponding system is provided as defined by claim 14. In accordance with another aspect of the invention, a corresponding computer-readable medium is provided, as defined by claim 15.

Various techniques known in the art, including the technique of Fong and Vedaldi described above, determine a mask that represents a specific explanation for a classification, and in that sense provide a single root cause for the classification. For example, removal of the information indicated by the mask may be sufficient to change the classification, or at least reduce its confidence. In other cases, preservation of just this information may be sufficient to obtain the classification. Generally, such a mask may be determined by optimizing an objective function comprising a classification score component and a size component. The classification score component may control the effect that applying the mask has on the classification score for the input instance. The size component may restrict an amount of features indicated by the mask.

As the inventors realized, however, determining a mask in this way may miss useful information about how the classifier arrived at the classification, or at least provide an incomplete impression of why the trained classifier classifies the input instance as belonging to the given class. For example, when finding a minimal explanation causing a classification score to drop, the known approaches may fail to take into account that other information (e.g. elsewhere in an input image) might also have the same effect. For example, a classifier trained to recognize a cat in an image may look for the combination of paws and a tail. Removing either of the two may change the classification that the classifier gives. In this case, highlighting just the tail, or just the paws, provides an incomplete picture. Equally, when finding minimal information that causes the classifier to arrive at a certain conclusion, other information that may also allow the classifier to reach the same conclusion may not be taken into account. For example, a classifier may find it sufficient to recognize either the body or the face of the cat. Thus, here, highlighting just the body fails to provide a complete picture of why the image looks like a cat according to the classifier.

Interestingly, the inventors envisaged to improve the informativeness of a determined mask by including not just a first explanation found by optimizing a mask, but also additional explanations. These additional explanations may be found by performing the same optimization as for the first explanation, but doing this in such a way as to avoid previously found explanations. The different explanations may be combined into an overall mask. This way, the mask better represents information in the input instance relevant to the classification. Thus, a more accurate mask is obtained, as explained in more detail below. Finding such additional explanations in a single optimization of an objective function, as known per se, is usually not possible since including such additional explanations in a mask that already contains the original explanation may provide little further effect to the classification score.

In more detail, in various embodiments, additional explanations are incorporated by determining the mask in an iterative fashion. For example, having obtained a current mask by optimizing an objective function as described above, this mask may be updated by performing a further optimization to determine an additional mask. The additional mask can for example be determined by optimizing an objective function including a classification score component and a size component, as discussed above. To prevent the original explanation from being determined again, however, the inner optimization may be configured to avoid indicating features already indicated by the current mask. The additional mask may then be combined with the current mask to obtain an updated mask that incorporates both explanations, e.g., both sufficient or necessary conditions for the given classification. This updated mask may then be updated again in a further iteration (or over multiple further iterations), for example, until no more additional sufficient conditions are found.

Accordingly, through the above process, a mask may be determined which incorporates the most important, or even all, explanations according to the objective function. Such explanations may be considered to be "sufficient" or "necessary" explanations, analogously to necessary and sufficient conditions from the field of logic.

For example, a mask may indicate which features of an input instance to perturb. In this case, a mask that causes the classification score of the perturbed input instance to drop significantly may be regarded as a "sufficient" explanation in the sense that perturbing the indicated features is sufficient to cause the drop in classification score for the given classification. Using the provided techniques, multiple such sufficient explanations may be determined. Analogously to logic, the combination of all found sufficient explanations may then be regarded as a necessary and sufficient explanation. For example, one classification model may detect a human in an image by detecting the presence of a human head in the image, e.g., perturbing the head is sufficient for causing the classification score to drop. For another classification model, the torso may also be a sufficient feature. When determining a single sufficient classification, for both models the head may be returned since removing the head decreases the classification score in both cases. However, using the techniques described herein, for the second classification model, also the torso may be returned as an additional sufficient explanation, providing more complete information about why the classifier considers the image to be a human. Thus, in this example, the provides techniques uncover functional differences between the two models. Uncovering such functional difference is useful, e.g., because they are likely to be representative of undesirable behaviours in edge-cases.

Analogously, a mask may indicate which features of an input instance to preserve. In this case, a mask may be determined causing the classification score for the input instance perturbed by preserving the indicated features to increase. Such a mask may be regarded as a "sufficient" explanation in the sense that the indicated features are sufficient, or at least significantly contribute towards, arriving at the given classification. Logically, this can be understood as an implication $A \Rightarrow B$, where $A$ may represent, e.g., "Input features $x, y, z$ are highlighted" and $B$ may represent, e.g., "The classifier outputs class $C$". Several such sufficient explanations may be determined that each separately provide such a sufficient set of features. Accordingly, it may be determined what other conditions can be present in the input for the model to come to the same conclusion. As above, such a combination of sufficient explanations may be regarded as a necessary and sufficient explanation (although technically, this explanation may not be exactly the same as the one discussed in the previous paragraph).

Accordingly, determining a mask as described herein can greatly help to validate and verify the model. For example, masks as determined herein may be output to a user, who may use this feedback to improve the classifier, e.g., by adding additional training data for edge cases to the training dataset, and/or by adapting the architecture or settings of the classifier. Generally, by determining an explainability mask as recited by the independent claims, a user may determine whether a trained classifier has learned as much as expected. For example, if the explainability mask reveals that the trained classifier relies heavily on the detection of grass in order to classify a horse, the user may consider that the trained classifier has not been adequately trained, and perhaps a more diverse training dataset is required. Thus, the explainability mask may also reveal hidden biases, and may prompt a user to address such biases by retraining or further developing the classifier.

Also in many other cases, the improved masks as described herein may be used advantageously. For example, by including additional explanations in the mask, better feedback may be provided to end users of the trained classifier as to why an input belongs to a certain class. For example, in cases where there are multiple sufficient conditions that each separately lead to the same classification, it can be useful to present all of this information to the user such that the user can more easily understand or confirm the classification made by the classifier. For example, when applied to the classification of manufactured products, it may be useful to know all of the factors contributing to a "Not OK" classification in order to better diagnose problems in the manufacturing process. Similarly, in cases where the mask is output to another software component, including additional evidence supporting a given classification generally provides more information to the component, enabling the component to use the mask more effectively. Various examples of automated uses of masks that are accordingly improved, are discussed throughout this specification.

The mask can be applied at the input layer of the trained classifier, analogously to the techniques of Fong and Vedaldi, but it is especially advantageous to instead apply the mask to an internal layer of the trained classifier. In this latter case, the input instance may be perturbed by the mask by obtaining a latent representation of the input instance at the internal layer according to the trained classifier and modifying the latent representation according to the features indicated by the additional mask to obtain a perturbed latent representation. The trained classifier may then be applied to the perturbed latent representation to determine a classification score for the input instance whose latent representation is perturbed by the mask. The latent representation, also known as an activation volume, is an output of the internal (e.g. hidden) layer of the trained classifier. An internal layer is a layer of the trained classifier between the input layer and the output layer. For example, a latent representation of layer $k$ may be considered as the output of the $k$-th layer of the trained classifier. The latent representation typically has a coarser spatial resolution than the input instance, and commonly relates to deeper, more complex structures of the input instance. The latent representation may provide an abstracted, more semantic, and/or compressed representation of the input instance, whilst preserving a spatial relationship with the input instance.

Specifically, by applying modifications at an internal layer of the trained classifier, adversarial solutions may be avoided or reduced. For deletion masks, adversarial solutions are solutions in which a mask is so small as to cause minimal change to the input instance, for example, barely perceivable, but that nevertheless still causes a large change in the classification output of the model. Similarly for preservation masks. Since the resolution of a latent representation of an internal layer of the trained classifier is typically coarser than that of the input instance, adversarial solutions may be unlikely to persist from the input layer to internal layers. Moreover, adversarial solutions may generally arise by keeping/blocking individual features. By keeping/blocking more complex concepts, as is achieved by applying a mask to a latent representation, such adversarial solutions may be avoided or mitigated.

Moreover, internal layers, particularly later convolutional layers, typically represent significantly compressed information about the original input instance, making it more feasible for an optimization model to determine a good mask, or at least making it more efficient to perform the inner optimization.

Accordingly, a mask may indicate features of an input instance at a given layer for explaining the classification. Generally, a "feature" may be a unit of representation of the input instance at that layer, e.g., corresponding to a neural network node or neuron. Masks may also be referred to as maps or heatmaps. The input instance may be modified, or "perturbed", according to the mask. The modifications may relate to a means of obscuring a region of the layer to which it is applied either completely or partially, and/or a means of blurring such region. The modifications may be considered to "block" or suppress activations of the layer of the trained classifier. The amount or degree of modifications to be applied to which part of the layer may be determined by an optimization process.

In particular, the mask may indicate how to modify the input instance at the given layer in order to affect the classification indicated by the trained classifier. Generally, the mask may either indicate which features to perturb or block (other features being retained), or indicate which features to retain (other features being perturbed or blocked). The first case of perturbing features can be considered a "deletion game" in which, starting from the original input instance, features are blocked in order to decrease confidence of the classifier. In such a case, the objective function may be configured to minimize the classification score for the perturbed input instance. The second case of retaining features can be considered a "preservation game" wherein, starting from a completely blocked input instance, features are included in order to recover the classification. In such a case, the objective function may be configured to maximize the classification score for the perturbed input instance to encourage recovering the classification.

By using a classification score component and a size component, the importance having of a small amount of modifications can be balanced with the importance of having a modified classification score. The mask may be updated in order to determine a small, or minimal, region of the input instance at the given layer, and therefore a small or minimal region of the input instance, that is most relied upon by the trained classifier in its determination of the classification. In subsequent iterations, the optimization may be configured to avoid indicating features already indicated by the current mask, and so to provide additional small or minimal regions that indicate to the classifier that the input instance is from the given class.

Generally, the inner optimization may identify a region containing features of the input instance which the trained classifier weighs heavily. For example, if the input instance was an image of a cat, the objective function may be optimised such as to identify a mask covering as small an area as possible, for instance, the cat's ears. For example, keeping just this area of the input instance may result in the classification score corresponding to the class of "cat" to be, for example, higher than a threshold, or may suffice for the classifier to classify the input image as a cat. Conversely, removing this area from the input instance may result in a significant drop in classification score. Both may be indications that the trained classifier considers the cat's ears to be an indicator of what defines a "cat". Hence, the mask may indicate areas of the input instance allowing the trained classifier to reach its determined classification, starting from the most responsible area and progressing to additional areas that support the classification. Or, the mask may indicate areas needed to reach a classification score, starting from the area most affecting the classification score and progressing to additional areas.

As discussed, the mask may be applied to the latent representation of the input instance. Such a latent representation may preserve the spatial relationship with the input instance, and so the concept may remain the same: identifying a small area of the latent representation to obscure or retain which affects the classification score may by proxy identify a correspondingly small area of the input instance.

Optionally, the layer to which the mask is applied may be a convolutional layer of the trained classifier, preferably immediately preceding a first dense layer. Deeper convolutional layers of the trained classifier may respond strongly to concepts that are likely to be highly localized in the input instance. By using the last convolutional layer in a trained classifier, the receptive field of the internal layer may cover more, if not all, of the input instance, and information on highly localized and complex features may be determined. Additionally, adversarial solutions may be avoided, as it is unlikely that these are translated to the deeper convolutional layers of the trained classifier.

Optionally, the determined mask may be scaled to a size of the input instance. The scaling may be achieved through a multitude of scaling means, such as by upsampling. For example, bilinear upsampling may be used in order to arrive at a spatial resolution matching that of the input instance. Other techniques for scaling the mask also exist and may be used, such as a series of transposed convolutions or deconvolutions.

Optionally, the updating of the mask may be terminated if a degree of modification indicated by the determined additional mask is smaller than a threshold. For example, if the mask found by optimizing the objective function indicates few or no features, this may indicate that no modifications were found for which the change in classification score could compensate the size component. For example, no additional areas could be found to be retained (or if the deletion game is used, removed) from the input instance at the given layer for which the increase (or decrease) in classification score compensated for the size of the area. Accordingly, no additional sufficiently relevant area of the input instance was found and thus the progressive updating of the mask may be terminated and the combination of the masks found so far may be returned.

Optionally, the objective function may be evaluated for the determined mask. By balancing the classification score component and the size component, the objective function may provide an overall quality metric of the determined mask, e.g., that can be used to compare the quality of masks determined for respective input instances to each other. In other words, the value of the objective function may be regarded as a quantitative measure of the importance of an explanation identified by the mask.

Optionally, the mask may indicate modifications to features of the input instance at multiple layers of the trained classifier, for example, at two or more subsequent layers, or at any subset of layers. For example, when determining a mask, whether in the first outer iteration or in a later outer iteration, it may be determined that perturbations at multiple layers are needed to obtain a desired change in classification score. Accordingly, the mask may be fixed or extended to cover multiple layers. An additional mask covering multiple layers may be determined in various ways, e.g., by performing an inner optimization with respect to a mask covering multiple layers, or by determining respective constituent masks in respective optimizations and combining the constituent masks.

Optionally, the input instance may be an image. The methods presented herein are particularly suited for image classification for various reasons. Image classifiers are typically relatively complex, making it particularly important to provide interpretability. Moreover, the possibility to visualize image regions provides a particularly efficient and intuitive way for image masks to be output. Also, for various types of image classification models, for example, those based on convolutional layers, the techniques described herein allow masks to be determined at internal layers of the model, with the various advantages discussed herein such as preventing adversarial modifications. Such internal layer masks can be scaled to the size of the input image to effectively obtain a mask for the input image. Such a mask for the input image can then be presented next to or overlayed on the input image, for example. Optionally, the input image comprises an image-based representation of at least one of a group of: image data, audio data, video data, text data, radar data, LiDAR data and time series data. This enables use for a wide range of applications, for example involving the explainability of classifying audio data.

Optionally, obtaining the input instance comprises obtaining the instance from a sensor. For instance, sensor data represented may be obtained by means of an input interface. Such sensor data may comprise image/video/radar/LiDAR/ultrasonic sensor data, etc. Classification of sensor data is being used for more and more critical applications, in such application domains as optimization of automated manufacturing processes, medical image analysis or diagnosis, and the like, making it increasingly important to explain how the classifier classifies inputs.

Optionally, outputting the mask may comprise outputting the mask in a sensory perceptible manner to a user, such as via a display, which may enable a user to see the explainability mask. For instance, the user may inspect the explainability mask to understand how the trained classifier arrived at its classification. This may indicate to the user whether the trained classifier is adequately trained, or it may alert the user to hidden biases stemming from an inadequate training dataset, for example. The explainability mask may additionally or alternatively be output to a processor subsystem, such as an external processor subsystem or to a function or computer program within the same system in which the method is implemented, such as for use in an automated system. In some embodiments, the explainability mask is output to an external server or cloud-based storage, or to a remote database. For example, the explainability mask may be used in a manufacturing process involving automated optical quality inspection. The location of highlighted features in the explainability mask for an image of a product may determine how that product is routed or subsequently sorted or handled.

It will be appreciated by those skilled in the art that two or more of the above-mentioned embodiments, implementations, and/or optional aspects of the invention may be combined in any way deemed useful.

Modifications and variations of any system and/or any computer readable medium, which correspond to the described modifications and variations of a corresponding computer-implemented method, can be carried out by a person skilled in the art on the basis of the present description.

## BRIEF DESCRIPTION OF THE DRAWINGS

These and other aspects of the invention will be apparent from and elucidated further with reference to the embodiments described by way of example in the following description and with reference to the accompanying drawings, in which:

Fig. 1 shows a system for determining a mask for explaining a classification of an input instance to a trained classifier;
Fig. 2a shows a schematic of a trained neural network classifier and Fig. 2b shows a non-limiting example of a method of determining a classification score for an input instance perturbed at a layer of a trained neural network classifier according to a mask;
Fig. 3 shows a detailed example of a method of determining a mask by updating the mask in multiple outer iterations;
Fig. 4 shows a computer-implemented method of determining a mask for explaining a classification of an input instance to a trained classifier;
Fig. 5 shows a computer-readable medium comprising data.

It should be noted that the figures are purely diagrammatic and not drawn to scale. In the figures, elements which correspond to elements already described may have the same reference numerals.

## DETAILED DESCRIPTION OF EMBODIMENTS

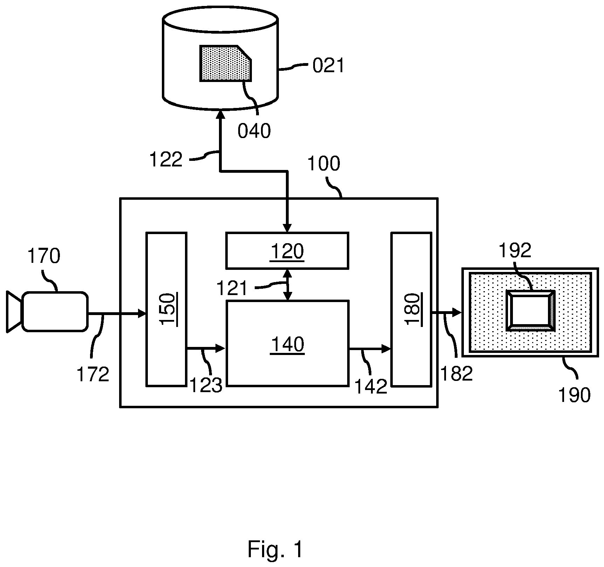

**Fig. 1** shows a system 100 for determining a mask for explaining a classification of an input instance to a trained classifier. The trained classifier may comprise one or more layers. The mask may indicate features of the input instance at a layer of the trained classifier for explaining the classification.

The system 100 may comprise a data interface 120 and a processor subsystem 140 which may internally communicate via data communication 121. The data interface 120 may be for accessing model data 040 defining the trained classifier, and optionally data representing an input instance. In some embodiments, a classification of the input instance and/or a latent representation of the input instance at an internal layer of the trained classifier may also be accessed by data interface 120. The processor subsystem 140 may be configured to, during operation of the system 100 and using the data interface 120, access data 040. For example, as shown in Fig. 1, the data interface 120 may provide access 122 to an external data storage 021 which may comprise said data 040. Alternatively, the data 040 may be accessed from an internal data storage which is part of the system 100. Alternatively, the data 040 may be received via a network from another entity. In general, the data interface 120 may take various forms, such as a network interface to a local or wide area network, e.g., the Internet, a storage interface to an internal or external data storage, etc. The data storage 021 may take any known and suitable form.

The processor subsystem 140 may be configured to, during operation of the system 100 and using the data interface 120, obtain an input instance and a classification of the input instance. The processor subsystem 140 may also be configured to, during operation, initialize the mask and update the mask over multiple outer iterations. An outer iteration of the multiple outer iterations may comprise updating the mask from a current mask to an updated mask. To update the mask, an additional mask may be determined in an inner optimization. The inner optimization may be configured to avoid indicating features already indicated by the current mask. To update the mask, the additional mask may further be combined with the current mask to obtain the updated mask. The updated mask can then become a "current mask" for a next outer iteration.

The processor subsystem 140 may be further configured, during operation of the system 100, to output the determined mask. In some embodiments, the processor subsystem may output the determined mask to another processing system, network entity, computer program or function, allowing the mask to be used for, e.g. an automated process or to further refine the trained classifier 040. As an optional component, the system 100 may comprise a display output interface 180 or any other type of output interface for outputting the determined mask and/or a perturbed instance obtained by applying the determined mask to the input instance to a rendering device, such as a display 190. For example, the display output interface 180 may generate display data 182 for the display 190 which causes the display 190 to render the determined mask and/or the perturbed instance in a sensory perceptible manner, e.g., as an on-screen visualization 192. In some embodiments, the processor subsystem 140 outputs the determined mask in a sensory-perceptible manner, such as on screen or via sound, to a user.

As an optional component, the system 100 may comprise an image input interface 150 or any other type of input interface for obtaining sensor data from a sensor, such as a camera 170. The sensor data may be comprised in the input instance. For example, the camera 170 may be configured to capture image data 172, and processor subsystem 140 may be configured to obtain the input instance 123 from image data 172 obtained via input interface 150.

The system 100 may also comprise a communication interface (not shown) configured for communication with another system or entity, such as an actuator or automated system. For example, if the system 100 were used to determine a mask that could later be used in determining how a product in a manufacturing process is handled, the communication interface may communicate with a system or actuator controlling the manufacturing process. The communication interface may internally communicate with processor subsystem 140 via data communication (not shown). The communication interface may be arranged for direct communication with another system, e.g., using USB, IEEE 1394, or similar interfaces. The communication interface may also communicate over a computer network, for example, a wireless personal area network, an internet, an intranet, a LAN, a WLAN, etc. For instance, the communication interface may comprise a connector, e.g., a wireless connector, an Ethernet connector, a Wi-Fi, 4G or 4G antenna, a ZigBee chip, a Bluetooth connector, an NFC connector, etc., as appropriate for the computer network. The communication interface may also be an internal communication interface, e.g., a bus, an API, a storage interface, etc.

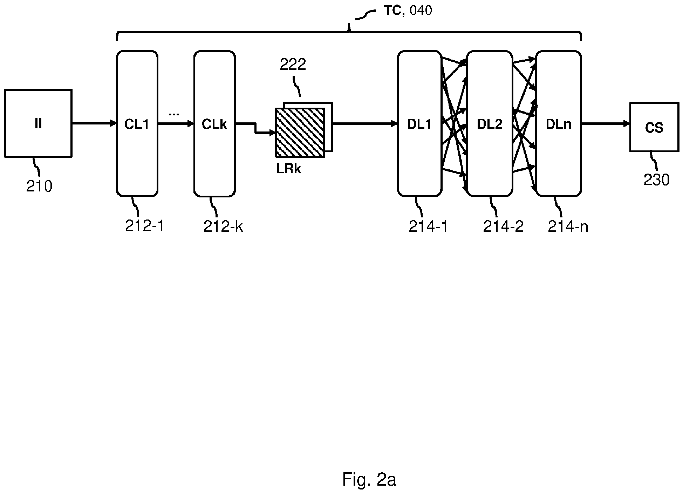

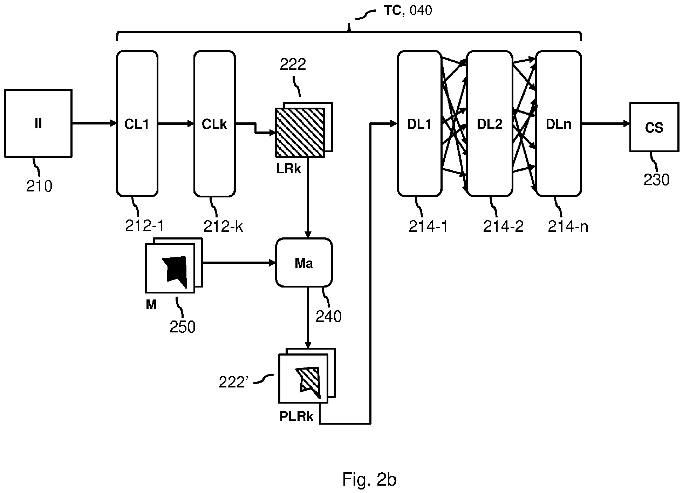

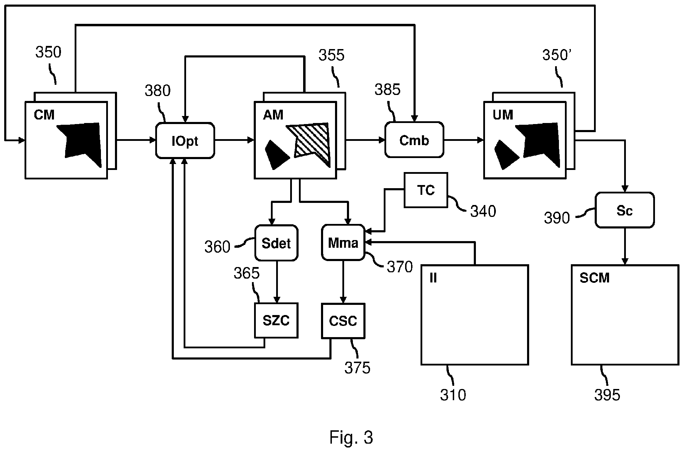

Various details and aspects of the operation of the system 100 will be further elucidated with reference to Figs. 2a, 2b, and 3, including optional aspects thereof.

In general, the system 100 may be embodied as, or in, a single device or apparatus, such as a workstation, e.g., laptop or desktop-based, or a server. The device or apparatus may comprise one or more microprocessors which execute appropriate software. For example, the processor subsystem may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the functional units of the system, e.g., the data interface and the processor subsystem, may be implemented in the device or apparatus in the form of programmable logic, e.g., as a Field-Programmable Gate Array (FPGA). In general, each functional unit of the system may be implemented in the form of a circuit. It is noted that the system 100 may also be implemented in a distributed manner, e.g., involving different devices or apparatuses, such as distributed servers, e.g., in the form of cloud computing.

**Fig. 2a** shows an example of a trained classifier **TC,** 040, for use with the techniques described herein, for example, as trained classifier 040 of Fig. 1. In this example, the classifier is a neural network classifier. **Fig. 2b** illustrates a non-limiting example of a method of determining a classification score for an input instance perturbed at a layer of such a trained neural network classifier according to a mask. Various features in Fig. 2a-2b are explained with reference to a system for image classification, but as the skilled person understands, this is not a limitation, as the techniques are readily applied to other kinds of instances. For example, various types of data may be provided in an image-based representation, such as video data; audio data; sensor data, e.g. obtained from a sensor; radar/LiDAR data; and/or time series data.

The process illustrated in Fig. 2a describes, at a high level and greatly simplified, a classification of an input instance in a convolutional neural network (CNN), for the sake of illustration. Other types of neural networks, such as deep neural networks, may also be used, as the skilled person will understand, and the following example is non-limiting and merely exemplary. In many cases, CNNs can be conceptually divided into two components: a convolutional part, comprising at least one convolutional layer, and a dense (e.g. fully-connected) part, comprising at least one dense layer.

It is not necessary to have dense layers, however. For example, the trained classifier **TC** may be a fully convolutional neural network, e.g., not comprising any fully connected layers.

An input instance **II,** 210 is input into trained classifier **TC,** more specifically to a first layer **CL1,** 212-1 of filters (or in some cases, a single filter). Each of the filters may convolve over the input instance **II,** 210, together producing an activation volume, or "latent representation". Each "slice" of the activation volume may be the output of one of said filters. The latent representation may have a different spatial resolution than the input instance **II.** The latent representation may then be used as an input to subsequent layer, **CLk,** 212-2. The filter(s) of **CLk** may then convolve over the latent representation output by the first layer **CL1** to produce a second latent representation. This process may continue for further layers 212.

It should be noted that throughout the convolutional part of the CNN, the spatial relationship of latent representations to the input instance is preserved, although the spatial dimensions of latent representations may differ from one latent representation to another, and from the spatial dimensions of the input instance.

After the last layer **CLk,** 212-k of the convolutional part of the CNN (often referred to as the last convolutional layer, although in some embodiments the last layer **CLk** of the convolutional part may not necessarily be a convolutional layer, provided it preserves the spatial relationship as discussed above), the resulting latent representation **LRk,** 222, is input into the first of the dense layers **DL1,** 214-1, and optionally subsequently to additional layers, e.g., layer **DL2,** 214-2, up to layer **DLn,** 214-n. The dense layers 214 may be fully-connected layers, in which the neurons of each fully-connected layer are connected to all of the neurons in another layer. After passing through the dense part of the CNN, a classification score **CS,** 230 (or set of classification scores) may be output.

Fig. 2b demonstrates the application of a mask to an input instance, and the result this has on its classification score. By choosing a mask that influences a classification score, a mask may be determined that explains how the trained classifier **TC** determines the classification. As shown in the figure, a mask **M,** 250, may be applied to a representation of the input instance at a given layer of the trained classifier **CL.** For example, mask **M** may be applied to the input layer of the trained classifier **TC,** in other words, to the input instance **II** itself. Mask **M** may be additionally or alternatively applied to an internal layer of the trained classifier **CL,** e.g., a convolutional layer **CLi,** e.g., last convolutional layer **CLk.** In some embodiments words, in order to determine what region(s) of the input instance were most relied upon for determining its classification, a mask may be determined that modifies the representation of the input instance **II** at the given layer as minimally as possible, whilst resulting in a sufficiently different, or in some embodiments, pre-specified, classification score or outcome. The mask **M** may have the same spatial dimensions and depth as the representation of the input instance **II** at the given layer, for example, having the same width, height, and depth as the input instance itself or a latent representation at an internal layer. In some embodiments, the mask may be optimised such that its application results in a classification score below (or above) a threshold classification score.

The mask **M** may indicate modifications which, in effect, delete or block (either fully or partially) information that is passed forward to subsequent layers. That is, when a mask is applied to a representation, specific values at that layer, as indicated by the mask, are at least partially ignored in the subsequent (e.g., deeper) layers. Such a mask may be referred to as a "deletion mask". Mathematically speaking, perturbation of a representation of an input instance at a convolutional layer of a trained classifier according to features indicated by a deletion mask m may be performed as follows:

$$P(A_{k_j}) = (1 - m) * (A_{k_j}) + m * Z.$$

In this formulation, $A_{k_j}$ is the output of the jth filter at the kth layer of the network. $P(A_{kj})$ computes a perturbed version of this filter output by modulating $A_{kj}$ with a mask m of the same spatial size as $A_{k_j}$, in this example containing values in the range [0,1]. Z refers to the zero-activation volume also of the same spatial size as $A_{kj}$. According to the above formula, neurons for which $m = 0$ pass on their activations unobstructed, while neurons for which $m = 1$ do not pass on any information. Other values may scale the activation accordingly. As the skilled person understands, the above way of applying a deletion mask is readily adapted to other types of trained classifiers and other types of layers, e.g., an input layer of any trained classifier.

Conversely, the mask **M** may also indicate what information is to be retained and accordingly passed forward to subsequent layers, the remaining information being effectively deleted or blocked. Accordingly, information not indicated by the mask may be ignored in subsequent layers. Such a mask may be referred to as an "preservation mask". Analogously to the above example of applying a deletion mask, a preservation mask may be applied as follows:

$$P(A_{k_j}) = m * (A_{k_j}) + (1 - m) * Z.$$

According to this formula, neurons for which $m = 1$ pass on their activations unobstructed, while neurons for which $m = 0$ do not pass on any information.

The perturbation of an input instance at a layer of the trained classifier **TC,** and resulting classification score output **CS** is illustrated in Fig. 2b. Fig. 2b differs from Fig. 2a in that, at a particular layer, in this case internal layer **CLk** 212-k, the input instance **II** is perturbed, in mask application **Ma,** 240, according to mask **M**. In other words, the latent representation **LRk** 222 at that layer may be modified according to features indicated by the mask **M**. The perturbed representation at the layer, in this case a perturbed latent representation **PLRk** 222', is then used as the input to deeper layers 214. Typically, the classification score resulting from the input instance **II** perturbed at a layer of the trained classifier **TC** according to (nonzero) mask **M** differs from the classification score of the input instance **II** as obtained following the process of Fig. 2a.

In Fig. 2b, the latent representation being perturbed is latent representation **LRk** 222 in the last layer of the convolutional part of a convolutional neural network, immediately preceding any non-convolutional layers, such dense/fully-connected layers. Using a later layer, e.g., the last or one of the last two or three convolutional layers, is advantageous in that adversarial solutions may be reduced or even prevented from having an unwanted effect on the classification score. Adversarial solutions are features of an instance which trigger a classification with a high level of confidence, despite being incorrect. Deeper layers of a CNN typically have a coarser spatial resolution than the input instance and are therefore less likely to translate adversarial solutions. Moreover, latent representations at deeper layers of a neural network are typically smaller than the input instance to which they are applied and therefore processing them is generally more efficient.

However, in order to apply a mask, the trained classifier **TC** does not need to be a CNN, e.g., it can be another type of neural network. Generally, any layer of the trained classifier can be used. Also in the case of a CNN, the representation to be perturbed by the mask does not have to be the last layer of the convolutional part of the network. Generally, the representation of the input instance **II** to be perturbed may be the output of one or more earlier layers. The representation of the input instance **II** can even be the representation at the input layer, in other words, the input instance **II** itself. Also in these cases, the perturbed representation continues through the remainder of the trained classifier, e.g., including any remaining layers of the convolutional part in the case of a CNN.

Fig. 3 shows a detailed yet non-limiting example of a method of determining a mask for explaining a classification of an input instance II, 310, to a trained classifier **TC,** 340. As in Figs. 2a and 2b, various features in Fig. 3 are explained with reference to image classification, but as the skilled person understands, this is not a limitation in that the techniques are readily applied to other kinds of instances, e.g., various types of sensor data as obtained, for example, from a sensor.

The technique illustrated in this figure is based on an inner optimization **IOpt,** 380 for determining a mask representing evidence for a classification of input instance **II** by the trained classifier **TC.** The inner optimization **IOpt,** discussed in further detail below, may determine a mask **AM,** 355, by systematically turning on or off activations of the trained classifier at a layer of the trained classifier **TC.** Accordingly, after inner optimization **IOpt,** the mask **AM** may indicate a subset of features at that layer to be completely or partially blocked, or to be completely or partially retained. The information that is determined in this single run may correspond to a set of evidence for the classification of the input instance. As now illustrated, inner optimization **IOpt** may be employed in an iterative manner to find additional such evidence.

At a high level, such additional evidence may be determined as follows. As discussed above, given trained classifier **TC,** input instance **II,** and a classification of that input instance, inner optimization **IOpt** may be used to determine a mask **AM,** 355. Mask **AM** may attribute the classification decision of the trained classifier **TC** to features of the trained classifier **TC** at a given layer. Denote features indicated by the additional mask **AM** as $N^-$, and features not indicated by the additional mask **AM** as $N^+$. Set current mask **CM,** 350, as $N = N^-$, with $N$ representing the set of features indicated by the outer optimization so far. In a next outer iteration, inner optimization **IOpt** may be performed again on the same input **II** and classifier **TC,** but in such a way that the mask does not indicate any features from the set $N$. After inner optimization **IOpt,** newly indicated features from $N^+$ may be added to set $N$, thus combining the additional mask **AM** with the current mask **CM** to obtain an updated mask **UM',** 350', that can then be used as a current mask **CM** in a subsequent outer iteration. The inner optimization **IOpt** may be repeated, for example, until the current mask **CM** converges or fewer than a given number of features are added, and/or until a maximum number of iterations is reached.

The trained classifier **TC** may be configured to classify input instances by determining classification scores. For example, the trained classifier may be a binary classifier or a multiclass classifier. The trained classifier may comprise one or more layers, for example, an input layer, an output layer, and any number of intermediate layers. For example, the trained classifier **TC** may be a neural network classifier or may at least comprise a neural network (sometimes also called an artificial neural network). A detailed example of a neural network classifier in the form of a convolutional neural network is given in Fig. 2a. Generally, the trained classifier **TC** may be parameterized by a set of parameters and/or hyperparameters. For example, the number of parameters may be at least 1000 or at least 10000. The parameters can include weights of neural network nodes, for example. It is beneficial from the point of view of efficiency of the inner optimizations presented herein to use a trained classifier for which the function computing the classification score is amenable to gradient-based optimization, e.g., which is continuous and/or differentiable in its set of parameters.

Input instance **II,** 310, to the trained classifier **TC,** may be an input image. A mask may be determined for explaining a classification of input instance **II.** Generally, a mask at a given layer of the trained classifier has the same size as the representation of the input instance at that layer (sometimes also called activation volume, e.g., in the setting of convolutional networks). This applies to the current mask, the additional mask, and the updated mask.

In many cases, the classification to be explained may be the classification of input instance **II** according to the trained classifier **TC.** For example, the trained classifier **TC** may be applied to input instance **II** to determine a classification of the input instance, and a mask for explaining this classification may be determined subsequently. In this case, the determined mask may reflect the information used by the trained classifier **TC** to reach its classification. However, it is also possible to determine a mask for explaining a classification of the input instance into another class, e.g., a ground truth classification or another manually defined classification. In this case, the determined mask may reflect information suggesting to the trained classifier that the input instance belongs to that other class, although this information may not have been sufficient to sway the trained classifier into classifying the input instance into that other class.

In the inner optimization **IOpt,** additional mask **AM** may be determined. In the first iteration, the additional mask **AM** may be determined in order to find a first explanation for the classification of the input instance; in subsequent iterations, the additional mask may be determined in order to find additional explanations for the classification. The first and subsequent iterations may be implemented the same way, but based on different versions of the current mask **CM,** e.g., a current mask initialized as an empty mask for the first iteration, and a current mask including explanations found so far for subsequent iterations.

As a concrete example of determining additional mask **AM,** an inner optimization may be used that takes into consideration both the amount or degree of modifications indicated by the additional mask **AM,** and the classification score resulting from perturbing the input instance by this mask. To take these factors into consideration, the inner optimization may involve optimizing an objective function comprising a size component **SZC,** 365, and a classification score component **CSC,** 375, both determined for the additional mask **AM.**

The size component **SZC** may restrict an amount of features indicated by the additional mask and/or a degree to which these features are indicated, e.g., an amount of features to be blocked in the case of a deletion mask, or an amount of features to be retained in the case of a preservation mask. For example, the size component **SZC** may include a norm of the mask, as discussed in further detail below.

The classification score component may be based on a classification score for the input instance perturbed according to the additional mask **AM.** The input instance may be perturbed according to the additional mask **AM** at the input layer of the trained classifier **TC,** e.g., as disclosed in "Interpretable explanations of black boxes by meaningful perturbation" by R. Fong and A. Vedaldi. The input instance may also be perturbed at an internal layer of the trained classifier **CL,** e.g., as illustrated in Fig. 2b.

As discussed, in some embodiments, the masks used may be deletion masks, in which case the input instance **II** may be modified according to a mask by perturbing features of the input instance as indicated by the mask. In such a case, the classification score component **CSC** of the objective function may be configured to minimize the classification score for the perturbed input instance. In combination with the size component **SZC,** the optimization may thus be encouraged to determine an additional mask **AM** that perturbs as little of the input instance (at the layer on which it operates) as possible yet causes a significant decrease in confidence of the classification of the input instance. In that sense, the features indicated by the additional mask **AM** in the case of a deletion mask may be regarded as sufficient in the sense that removing them suffices to decrease the classification score or may even cause the input instance not to be recognized as belonging to the given class anymore.

In other embodiments, the masks may be preservation masks, in which case the input instance may be modified according to a mask by retaining the features indicated by the mask. In such a case, the classification score component **CSC** of the objective function may be configured to maximize the classification score for the perturbed input instance. In combination with the size component **SZC,** the optimization may thus be encouraged to determine an additional mask **AM** that preserves as little of the input instance as possible yet still retains evidence of the classification of the input instance. In that sense, the features indicated by the additional mask **AM** in the case of a preservation mask may be regarded as sufficient, as including just these features increases the classification score or may even cause the input instance to be recognizes as belonging to the given class.

Interestingly, the inner optimization **IOpt** may be configured to avoid indicating features already indicated by the current mask **CM,** and accordingly, may be made to determine additional explanations of the classification of the input instance in addition to those already represented by current mask **CM.** The current mask **CM** may be a binary mask, e.g., features are either indicated or not indicated, or a continuous mask, e.g., the mask provides an amount or extent to which a feature is indicated. For example, in the case of a deletion mask, a feature may be considered to be indicated (for the purpose of avoiding it in subsequent iterations) if the current mask is set to perturb, block, or sufficiently block, the feature. In the case of a preservation mask, a feature may be considered to be indicated if the current mask is set to retain, or sufficiently retain, the feature. For example, in the case of deletion mask where $m = 0$ indicates retaining the feature and $m = 1$ indicates blocking it, a feature may be considered to be indicated if $m = 1$ or if $m$ is larger than a predefined threshold, e.g., $m \geq 0.8$ or $m \geq 0.9$.

Generally, the inner optimization may employ an objective function formulated in various ways, e.g., as a loss function or as an energy function. As an illustrative example, the additional mask **AM** may be configured as a deletion mask and may be assigned values in the range of [0,1] in which a value of 0 has no perturbative effect and a value of 1 indicates "blocking" (e.g. deleting) an activation. In such a case the following objective function may be used in inner optimization **IOpt:**

$$M^* = \min(M): \lambda_1 * \|M\| + f_{P(A_k),q}(x)$$

in which:

$x$ is the input instance **II,** e.g., a $M \times N \times c$-sized image;
$\lambda_1$ is a weighting term;
$M$ is the additional mask **AM** at a layer of the trained classifier, e.g., with dimensions $m \times n \times k$ with $k$ the number of filters at that layer;
$\|M\|$ is a norm of additional mask **AM;** and
$f_{P(A_k),q}(x)$ corresponds to the classification score with respect to a given class $q$ for input instance **II** perturbed according to additional mask **AM,** by applying a perturbation function $P$ to an activation volume $A_k$ at a layer of the classifier.

Typically, as initial value for the optimization, an empty mask is used, e.g., no features are indicated.
Several ways are possible of configuring the optimization to avoid indicating features already indicated by the current mask. For example, the objective function of inner optimization **IOpt** may be optimized with respect to only a subset of entries of the additional mask, or the by adding the constraint that $m_i = 0$ may be included in the inner optimization **IOpt** for entries of the additional mask that are already indicated by the current mask.
The weighting term may be a hyperparameter. The weighting term may be a real-valued weighting term defined a-priori which balances the importance of having a mask with a small amount of modifications versus a mask that minimizes the classification score. This value may vary depending on the trained classifier and/or input instance.
The objective function may thus comprise a size component **SZC** and a classification score component **CSC.** In the above formula, the size component **SZC** is the first term, i.e. $\lambda_1 * \|M\|$, and the classification score component **CSC** is provided by the second term, i.e. $f_{P(A_k),q}(x)$. Accordingly, in this example, both the size component and the classification score component are minimized. Although depicted here as a norm of the additional mask **AM,** e.g., an L0 norm or an L1 norm, other known regularization terms or combinations of norms, e.g., an L0 norm combined with an L1 norm, may similarly be used. Using an L0 norm has the advantage of directly counting, and accordingly minimizing, the number of activations. Using a L1 norm has the advantage of being differentiable and hence better amenable to optimization, and can thus be used as an approximation of the L0 norm.
Generally, as also illustrated in the figure, the inner optimization **IOpt** itself is an iterative process in which the additional mask **AM** is progressively updated, e.g., to find an optimum of the objective function. For example, inner optimization **IOpt** may determine an additional mask **AM** which is modified from the previous version of the additional mask **AM,** after which the updated additional mask **AM** may be applied to input instance **II** in a masked model application operation **Mma,** 370, resulting in classification score component **CSC** of the objective function, comprising the classification score for the perturbed input instance **II.** Furthermore, in a size determining operation **Sdet**, 320, the size component **SZC** of the objective component may be determined as the amount of features indicated by the additional mask. The classification score component **CSC** and size component **SZC** may be fed back into inner optimization **IOpt,** and further iterative updates to the additional mask **AM** may be made, etcetera.

Various known optimization techniques may be performed to implement inner optimization **IOpt,** e.g., stochastic optimization such as stochastic gradient descent. For example, the Adam optimizer as disclosed in Kingma and Ba, "Adam: A Method for Stochastic Optimization" (available at https://arxiv.org/abs/1412.6980 and incorporated herein by reference), can be used. As is known, optimization methods may be heuristic and/or arrive at a local optimum.

Inner optimization **IOpt** may continue until an optimum is found, for example, until the change in output is sufficiently low, or until the classification score differs from the classification score of the original input instance **II** by a specified amount or percentage. Inner optimization **IOpt** may also be ended if the classification score of the perturbed input instance meets a classification threshold. For example, a classification threshold may be determined a priori as a fixed score value or as a relative amount of the classification score of the input instance **II**. When the classification score meets the threshold, the inner optimization process **IOpt** may be terminated. This way, unnecessary further iterations of the inner optimization process are avoided, reducing the runtime of the method and the power consumed by the system in which the method is implemented.

For example, in some embodiments, it may suffice to iterate until the trained classifier **TC** no longer determines the correct classification of the input instance, e.g., until the classification score of another classification becomes larger than the classification score of the classification of the input instance **II**. For example, in a multi-class image classification system, if an input image is determined to be of the 'cat' class, the iterative process may terminate when the perturbed input instance is determined to be of a different class, such as 'fish'. More generally, as the threshold is predetermined, a user can cater the method to suit his or her needs. For example, in order to obtain a mask that highlights the features that are most responsible for activating a particular output class, the user may set the threshold value to a value approaching zero in the case of a deletion mask, or approaching one in the case of a preservation mask. For a deletion mask, a termination condition such as this may relate to whether the classification score component falls below a threshold classification score. For a preservation mask, a termination condition like this may instead relate to whether the classification score exceeds a threshold classification score.

Inner optimization **IOpt** may also proceed for a predetermined number of iterations. A user may determine a priori a number of iterations over which to optimize the additional mask **AM.** In some cases, this may refer to a maximum number of iterations, and the optimization process may terminate before reaching the maximum number of iterations if another termination condition is satisfied, for example if the classification score reaches the classification threshold. However, it is also possible to set a predetermined number of iterations without a termination condition based on the classification score. By setting a predetermined number of iterations over which to optimize the mask, it is possible to troubleshoot the system without entering infinite loops. Additionally, a user may be alerted to a problem if the optimization of the mask does not meet the requisite criteria within the predetermined number of iterations. The termination of the optimization after the predetermined number of iterations may further enable the method to proceed in different ways, such as by extending the mask to a previous layer.

It will be understood that these termination conditions are merely non-limiting examples thereof, and other termination conditions may be employed.

Another example of an objective function is now discussed for the case where the additional mask **AM** is a preservation mask indicating features of the input instance to be retained. For example, the mask may comprise values from [0,1] where 1 indicates to retain the corresponding feature and 0 indicates to block it. In such cases, the following objective function can be used:

$$M^* = \min(M)\colon \lambda_1 * \|M\| - f_{P(A_k),q}(x)$$

In this example, size component SZC, $\lambda_1 * \|M\|$, is based on the norm of mask $M$, e.g., a L0 and/or L1 norm. Minimising the size component is therefore equivalent to maximising the degree or amount of features being blocked by the mask $M$. In other words, the size component **SZC** is minimised as the values of $M$ approach 0. Values of $M$ approaching 0 in this case provide a greater perturbative effect (and values of $M$ approaching 1 provide a lesser or no perturbative effect).

In this example, the objective function is optimised by minimizing the size component **SZC,** in other words by maximizing the amount of features being blocked by the mask, and maximizing the classification score component **CSC,** $f_{P(A_k),q}(x)$. Conceptually, this approach may involve beginning with a mask that blocks all features of the input instance at the given layer, e.g. by initializing the mask to have only values of 0, and gradually unblocking features. The aim is to determine the lowest amount of activations to unblock in order to obtain the given classification or at least significantly increase its classification score. The lowest amount of activations being unblocked is conceptually equivalent to the highest amount of activations to remain blocked by the mask. Hence, in this case, the objective function may maximise the degree or amount of modifications, thereby minimizing the size component **SZC** of the above objective function, and also maximise the classification score component **CSC.**

In the above examples, features are indicated by using mask values $m = 1$ and not indicated by using mask values $m = 0$, and accordingly, the amount of indicated features can be restricted by minimizing norm $\|M\|$. Various alternatives are possible however, e.g., when indicating features by setting $m = 0$ and not indicating features by setting $m = 1$, restricting the amount of indicated features can be performed by maximizing norm ||*M*|| or minimizing norm || 1 - *M* ||.

Having determined additional mask **AM** though inner optimization **IOpt,** the additional mask **AM** may be combined with the current mask **CM** in combining operation **Cmb** to obtain updated mask **UM.** In some embodiments, the current and additional masks are binary masks, e.g., values of 0 or 1. In this case, the additional mask may be combined with the current mask using a binary operator, e.g., binary OR. Optionally, the additional mask is first discretized, e.g., by applying a threshold. In other embodiments, the current and additional masks can both be continuous masks, e.g., given by values in the interval [0,1]. The updating operation in this case may, for example, sum up the values of the current mask and the additional mask or compute a maximum of the current and additional value, etcetera. A threshold may be applied for including additional mask values in the updated mask, e.g., to avoid a small value of a feature in the additional mask preventing larger contributions of that feature in subsequent iterations.

The updating of the mask is illustrated in the figure. Shown is a current mask **CM** visualized as a stack of masks for respective filter outputs at an internal layer of the trained classifier. In this example, the current mask may contain, at its topmost filter mask, an area of indicated features, illustrated by the solid black figure in the current mask. The additional mask **AM** may then be determined such that it does not indicate those features already indicated in the current mask, as indicated by the dashed area of the additional mask **AM.** The determined additional mask **AM** may thus indicate additional features, as indicated by the solid black figure in the additional mask. The current mask and the additional mask may then be combined to obtain updated mask **UM** which, as illustrated, may indicate both the features indicated by the current mask and the features indicated by the additional mask.

As also alluded to elsewhere in this specification, various stopping criteria may be used for the outer optimization. Specifically, the updating of the mask may be terminated if a degree of modification indicated by the determined additional mask **AM** is smaller than a threshold. A small additional mask **AM** may indicate a failure to find a new explanation, indicating that all relevant explanations have been found. The degree of modification can for example correspond to the size component **SZC** for the additional mask, but can also be separately computed, e.g., as a L0 norm or similar. Interestingly, the size component **SZC** and the classification score component **CSC** used in the inner optimization **IOpt** may effectively avoid including explanations in the additional mask **AM** that do not sufficiently affect the classification score, e.g., because for such explanations the change in the classification score component may not sufficiently offset the increase in the size component. If no further sufficiently meaningful explanations can be found, a small or even empty additional mask may be returned, and the outer optimization may be terminated accordingly. Other stopping criteria, such as a maximum number of iterations, can be used instead or in addition.

In some embodiments, masks may be determined that cover multiple layers of the trained classifier **TC.** For example, an additional mask **AM** may be determined in inner optimization **IOpt** that covers multiple layers. The layers for which a mask may be determined may be predefined, e.g., set by a user, or determined on-the-fly. For example, a mask may be initialized for one or more initially selected layers, and the need to extend the mask to one or more additional layers may arise during the inner optimization **IOpt.** Accordingly, the inner optimization **IOpt** may determine an additional mask **AM** covering additional layers. Subsequent iterations may then employ a mask that covers at least the additional layers. In various embodiments, the first inner optimization **IOpt,** e.g., with no features previously indicated, may determine to which layers to extend the mask, with subsequent inner optimizations using the same set of layers.

For example, the inner optimization **IOpt** may extend additional mask **AM** to additional layers if the classification score component **CSC** of the objective function does not meet a classification threshold for a determined additional mask. For deletion masks, this extension may be implemented if the classification score component does not fall below a classification threshold, and for preservation masks, the extension may be implemented if the classification score component **CSC** does not exceed a classification threshold.

For example, if the classification score component **CSC** does not meet the appropriate threshold, the inner optimization **IOpt** may proceed to extend the additional mask **AM** to additionally cover a preceding layer of the trained classifier **TC.** For example, if the latent representation of layer k is initially used and the classification score component does not meet the appropriate classification threshold, the mask may be extended to also cover the latent representation of layer *k* - 1. The term "extending" here just means adding additional layer(s) to the set of layers that the mask covers; the contents of the mask at the previously covered layers do not necessarily need to be preserved.

Optionally, this process may repeat until the classification score component **CSC** of the objective function reaches, or crosses, the classification threshold. By extending the additional mask **AM** to additional layer(s), also the updated mask **UM** and thus the current mask **CM** for subsequent iterations may be extended to the additional layer(s). Also the additional masks determined in subsequent iterations may cover the additional layers, but they can also be extended only if needed.

For example, for the trained classifier of Fig. 2b, the additional mask **AM** may be extended to cover latent representation **LRk** and latent representation **LR(k-1).** Should the classification score component **CSC** still not reach the classification threshold, the mask may be extended to cover latent representation **LRk,** latent representation **LR(k-1)** and latent representation **LR(k-2)** and so forth, until the classification threshold is met. It is to be appreciated that it is also possible to extend the mask to cover subsequent or later layers, provided the spatial relationship with the input instance is still preserved. Preferably, however, the initially selected layer is a deep layer in order to discern features that are highly localised in space, in contrast to features that may be found broadly over the image, such as textures, which are typically represented in lower (e.g. shallower) layers.

In some embodiments, the additional mask **AM** is extended to cover multiple layers as described above and the inner optimization is performed over said multiple layers. In this case, the mask spans across these multiple layers throughout the inner optimisation process and is updated accordingly. The contents of the mask prior to the extending are typically not preserved. More specifically, in an example in which the mask extends across two layers, a first part of the mask **AM** is applied to the latent representation of the earlier of the two layers (e.g. layer $k$ - 1) and the perturbed earlier latent representation proceeds through layer $k$ (i.e. the subsequent layer) to produce a next latent representation, i.e. the output from layer $k$. A second part of the mask is then applied to this next latent representation to obtain a perturbed next latent representation, which may then continue through the remainder of the trained classifier **TC** to obtain a classification score. During the optimisation, values in both parts of the mask may be updated/altered.

In some embodiments, extending the mask over multiple layers comprises determining respective constituent masks at respective layers and the combining them to obtain additional mask **AM.** For example, first an updated mask $M_k$ for a particular layer may be determined, for example layer $k$, e.g., by optimising an objective function. Despite the optimisation, the classification score component may not be at an appropriate threshold, so the method may continue to the preceding layer. In this case, the method continues by selecting layer $k$ - 1, or in some cases, merely an earlier layer, although it is generally preferable to select the layer immediately preceding the initially used layer.

The method repeats as described above and an updated constituent mask $M_{k-1}$ for the latent representation of layer $k$ - 1 may be determined. The additional mask **AM** may then be a combination of constituent masks $M_k$ and $M_{k-1}$. The classification score may then be determined by applying the constituent mask $M_{k-1}$, e.g., the optimised mask for the latent representation of layer $k$ - 1, to obtain a perturbed latent representation for layer $k$ - 1, inputting the perturbed latent representation for layer $k$ - 1 to the subsequent layer of the trained classifier **TC,** in this case, layer $k$, obtaining the latent representation for layer $k$, perturbing the latent representation for layer $k$ with constituent mask $M_k$, and proceeding through the remainder of the trained classifier inputting the perturbed latent representation for layer $k$ into the subsequent layer of the trained classifier, in this case, layer $k$ + 1. If the obtained classification score, using both of these masks, meets the requisite criteria, additional mask **AM** is set to the combination of constituent mask $M_{k-1}$, and mask $M_k$. If, however, the obtained classification score still does not meet the requisite criteria, the method repeats at the preceding layer, $k$ - 2, and so on, until the resulting classification score meets the requirements.

In embodiments where the masks are determined at an internal layer of the trained classifier **TC,** a scaling operation **Sc,** 390, can be used to scale the determined mask to a size of the input instance **II.** For example, given an $M \times N \times c$-sized input image with width $M$, height $N$, and number of channels $c$ (e.g., $c$ = 3 for RGB), the mask may be scaled to size $M \times N$ to provide a mask value for each input pixel. Accordingly, the obtained scaled mask **SCM,** 395, may have the same spatial resolution as the input image **II.** For example, if the updated mask **UM** has a smaller spatial resolution than the input image **II,** it may be upscaled using any known technique, such as bilinear upsampling or using a series of transposed convolutions or deconvolutions, although many alternative scaling means are known and may be used to achieve the scaled mask **SCM.** If the mask **UM** spans multiple layers, each layer mask may be separately scaled, for example.

Although various examples relating to images have been discussed, data of other forms may also be represented in an image-based form and also used in the method as described above. For example, an audio file may be expressed using an image-based representation, i.e. the audio file may take on the form of an image file, and the above method could be used in the manner described above on the image-representation of the audio file. Similarly, video data, sensor data, radar data, time series data, and the like.

In some embodiments, the input instance may be obtained from a sensor, such as a camera, radar/LiDAR system, or the like. The sensor data may be represented as an image and used as an input to the trained classifier. In some embodiments, the input instance may be obtained from internal or external storage, via a server, downloaded from an external source, or obtained in any other way.

In some embodiments, a mask determined as described above may be output in a sensory perceptible manner to a user. For example, the mask may be displayed on a display of system 100 such that a user may see the areas of the input instance that were most relied upon by the trained classifier in determining its classification.

In some embodiments, the explainability mask is output to another function within the system determining it, or to another system. The explainability mask may be used by a subsequent function or program, e.g. in a processor subsystem, for myriad purposes, such as automated optical inspection or the like.

For example, the mask can be used for autonomous decision making. In the case of e.g. automated optical inspection in manufacturing applications, this signal could control a request for review by a human operator, or control an automated physical sorting system. This can be done by e.g. thresholding or classifying the determined masks, e.g. according to whether a minimum number of features are indicated in the heatmap. Additionally, because the mask determined at the layer of the trained classifier typically spans multiple filters of a convolutional layer, such actions may also be conditioned based on a number of activated features per filter. Interestingly, this leverages the fact that different filters often learn different concepts, so an additional condition could be e.g. whether one particular filter activates past a minimum amount or not.

For example, the explainability mask may be used in a manufacturing process comprising an optical quality inspection system. In this case, the explainability mask may be determined for an input image that comprises a measurement of a product produced in the manufacturing process, and may be classified by a trained classifier to be OK (i.e. meeting one or more quality criteria) or NOK (i.e. failing to meet said quality criteria). The input image may be input into the trained classifier and an explainability mask may be obtained based on the described method. The explainability mask, which indicates regions of the input image that are most relevant for classification of the input image in a particular class, may then be used to appropriately sort, direct, and/or handle the product. For example, if the explainability mask highlights a crack in the top left corner of the input image, it may represent a cracked housing of the product. The product may then be directed to an area of the manufacturing process that can address cracked housings. If the explainability mask highlights an area known to be a weld-point as being the primary reason for the input image (and therefore the product) being classed as "NOK", the product may be directed to a different part of the manufacturing process, and so on. More generally, countermeasures may be derived automatically by feeding the root causes represented by the mask back to the controller logic that steers manufacturing variables, e.g., heat, pressure, weld time, etc.

As a further example within the manufacturing process, if the explainability masks corresponding to many products in a batch consistently indicate a particular aspect of the product that is NOK, the manufacturing process may automatically adjust at least one associated parameter. For example, if welds are consistently indicated in explainability masks of a batch of product as being NOK, the parameters of the welding process may be adjusted. In some cases, a human operator may be alerted to such a problem and the human operator may make requisite adjustments accordingly.

Other examples of the use of explainability masks as determined by the method described herein include processes in the field of autonomous vehicles. For example, an autonomous vehicle may obtain an image of the road ahead via one or more sensors, such as a camera. A trained classifier, such as trained classifier 040, may classify the image as OK (e.g. no detected abnormalities) or NOK (e.g. detection of an abnormality), or may classify the image into further classes. An autonomous vehicle hazard detection system, for example, may use an explainability mask as determined according to the method described herein to ensure that a hazard detection system is operating as expected. If the explainability mask detects an anomaly such as a speed bump or pothole along the bottom of the image, it may indicate a speed bump or pothole in the road, for example, which is generally where speed bumps and potholes are expected to be. If the explainability mask instead indicates a speed bump or pothole in the top of an image, such as in the sky, it may determine that the hazard detection system is not behaving as intended, and a warning may be triggered.

Interestingly, the value of the objective function used in the inner optimization may effectively be regarded as an overall quality metric of the determined mask. Accordingly, the quality of the determined explanation mask may be quantified by assessing it from a contrastive perspective, e.g., based on how much it affects the original classification score of the input instance. For example, masks for multiple input instances may be quantitatively compared based on the values of their objective functions.

In various embodiments, the masks are determined for debugging the trained classifier. By determining masks for explaining classifications, useful information about the internal functioning of the trained classifier is obtained. This information can be used in automated fashion, e.g., to adapt model (hyper)parameters, or to adapt or generate additional training data. The information can also be presented to a model developer to help the model developer improve the model. For example, the bias of a trained classifier may be studied automatically by comparing the features indicated by the trained classifier for training instances to the features indicated by the trained classifier for other instances, e.g., to which the deployed classifier is applied. For example, such a comparison can be performed on a filter-by-filter basis. This can reveal e.g. statistically significant differences in how a model invests attention between concepts found in its training data vs. its validation or test data, or the data to which it is applied in practice, and serve therefore as a key indicator of how well it is expected to generalize. As another example, one or more instances may be determined which have an unusual mask, e.g., in terms of which filters are activated how much in the mask. For example, these instances may be manually inspected based on which, e.g., their training output may be corrected (e.g., if the instance was misclassified in the training data); additional training instances of that kind may be collected (if the instance was misclassified by the model); etc.

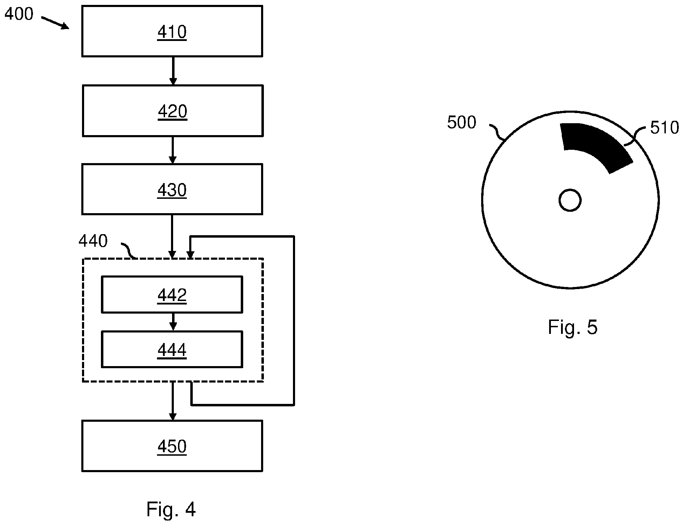

**Fig. 4** shows a block-diagram of a computer-implemented method 400 of determining a mask for explaining a classification of an input instance to a trained classifier. The trained classifier may comprise one or more layers. The mask may indicate features of the input instance at a layer of the trained classifier for explaining the classification. The method 400 may correspond to an operation of the system 100 of Fig. 1. However, this is not a limitation, in that the method 400 may also be performed using another system, apparatus or device.

The method 400 may comprise, in an operation titled "ACCESSING CLASSIFIER", accessing 410 model data defining the trained classifier. The method 400 may comprise, in an operation titled "OBTAINING INPUT INSTANCE, CLASSIFICATION", obtaining 420 an input instance and a classification of the input instance. The method 400 may also comprise, in an operation titled "INITIALIZING MASK", initializing 430 the mask. The method 400 may further comprise updating the mask in multiple outer iterations 440. An outer iteration 440 of the multiple outer iterations may comprise updating the mask from a current mask to an updated mask. To update the mask, the method 400 may comprise, in an operation titled "DETERMINING ADDITIONAL MASK", determining 442 an additional mask in an inner optimization. The inner optimization may be configured to avoid indicating features already indicated by the current mask. To update the mask, the method 400 may further comprise, in an operation titled "COMBINING MASKS", combining 444 the additional mask with the current mask to obtain the updated mask.

The method 400 may further comprise, in an operation titled "OUTPUTTING MASK", outputting 450 the determined mask.

It will be appreciated that, in general, the operations of method 400 of Fig. 4 may be performed in any suitable order, e.g., consecutively, simultaneously, or a combination thereof, subject to, where applicable, a particular order being necessitated, e.g., by input/output relations.

The method(s) may be implemented on a computer as a computer implemented method, as dedicated hardware, or as a combination of both. As also illustrated in **Fig. 5,** instructions for the computer, e.g., executable code, may be stored on a computer readable medium 500, e.g., in the form of a series 510 of machine-readable physical marks and/or as a series of elements having different electrical, e.g., magnetic, or optical properties or values. The executable code may be stored in a transitory or non-transitory manner. Examples of computer readable mediums include memory devices, optical storage devices, integrated circuits, servers, online software, etc. Fig. 5 shows an optical disc 500. Alternatively, the computer readable medium 500 may comprise transitory or non-transitory data 510 representing decoder model data for predicting object feature vectors of multiple interacting physical objects as described herein; and/or encoder model data for classifying pairwise interactions between multiple physical objects into a set of multiple interaction types as described herein.

Examples, embodiments or optional features, whether indicated as non-limiting or not, are not to be understood as limiting the invention as claimed.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of' when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A computer-implemented method (400) of determining a mask for explaining a classification of an input instance to a trained classifier, the trained classifier comprising one or more layers, the mask indicating features of the input instance at a layer of the trained classifier for explaining the classification, the method comprising:

   - accessing (410) model data defining the trained classifier;
   - obtaining (420) the input instance and the classification of the input instance;
   - initializing (430) the mask;
   - updating the mask in multiple outer iterations, an outer iteration (440) of the multiple outer iterations comprising updating the mask from a current mask to an updated mask by:

     - determining (442) an additional mask in an inner optimization, the inner optimization being configured to avoid indicating features already indicated by the current mask; and
     - combining (444) the additional mask with the current mask to obtain the updated mask;

and

- outputting (450) the determined mask.

**2.** The method (400) of claim 1, wherein determining the additional mask comprises optimizing an objective function comprising a classification score component and a size component, the classification score component being based on a classification score for the input instance perturbed at the layer of the trained classifier according to the additional mask, the size component restricting an amount of features indicated by the additional mask.

**3.** The method (400) of claim 2, wherein the layer of the trained classifier is an internal layer, the classification score for the input instance perturbed at the layer of the trained classifier according to the additional mask being determined based on modifying a latent representation of the input instance at the internal layer according to the features indicated by the additional mask.

**4.** The method (400) of claim 3, wherein the latent representation is modified by retaining features of the input instance as indicated by the mask, the objective function being configured to maximize the classification score for the perturbed input instance.

**5.** The method (400) of claim 3, wherein the latent representation is modified by perturbing features of the input instance as indicated by the mask, the objective function being configured to minimize the classification score for the perturbed input instance.

**6.** The method (400) of any one of claims 3 to 5, wherein the layer of the trained classifier is a convolutional layer, preferably immediately preceding a first dense layer.

**7.** The method (400) of any one of claims 3 to 6, further comprising scaling the determined mask to a size of the input instance.

**8.** The method (400) of any one of claims 2 to 7, further comprising evaluating the objective function for the determined mask to obtain an overall quality metric of the determined mask.

**9.** The method (400) of any preceding claim, wherein the input instance is an image.

**10.** The method (400) of any preceding claim, further comprising terminating the updating of the mask if a degree of modification indicated by the determined additional mask is smaller than a threshold.

**11.** The method (400) of any preceding claim, wherein the mask indicates modifications to features of the input instance at multiple layers of the trained classifier.

**12.** The method (400) of any preceding claim, wherein obtaining the input instance comprises obtaining the input instance from a sensor.

**13.** The method (400) of any preceding claim, wherein outputting the mask comprises at least one of outputting the mask in a sensory perceptible manner to a user and outputting the mask to a processor subsystem.

**14.** A system (100) for determining a mask for explaining a classification of an input instance to a trained classifier, the trained classifier comprising one or more layers, the mask indicating features of the input instance at a layer of the trained classifier for explaining the classification, the system comprising:

- a data interface (120) for accessing model data defining the trained classifier;
- a processor subsystem (140) configured to:

  - obtain the input instance and the classification of the input instance;
  - initialize the mask;
  - updating the mask in multiple outer iterations, an outer iteration of the multiple outer iterations comprising updating the mask from a current mask to an updated mask by:

    - determining an additional mask in an inner optimization, the inner optimization being configured to avoid indicating features already indicated by the current mask; and
    - combining the additional mask with the current mask to obtain the updated mask;

  and
  - output the determined mask.

**15.** A computer-readable medium (500) comprising transitory or non-transitory data (510) representing instructions which, when executed by a processor system, cause the processor system to perform the method according to any one of claims 1 to 13.

Fig. 1

Fig. 2a

Fig. 2b

Fig. 3

400

410

420

430

440

442

444

450

Fig. 4

500

510

Fig. 5

**EUROPEAN SEARCH REPORT**

Application Number

EP 20 15 5675

Europäisches Patentamt
European Patent Office
Office européen des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALZANTOT MOUSTAFA ET AL: "NeuroMask: Explaining Predictions of Deep Neural Networks through Mask Learning", 2019 IEEE INTERNATIONAL CONFERENCE ON SMART COMPUTING (SMARTCOMP), IEEE, 12 June 2019 (2019-06-12), pages 81-86, XP033588064, DOI: 10.1109/SMARTCOMP.2019.00033 [retrieved on 2019-07-31] | 1-10, 12-15 | INV. G06N3/04 G06N3/08 |
| Y | * abstract; figures 1-4 * * page 82, left-hand column - page 86, left-hand column * | 11 | |
| Y | MONTAVON GRÉGOIRE ET AL: "Layer-Wise Relevance Propagation: An Overview", 10 September 2019 (2019-09-10), 12TH EUROPEAN CONFERENCE ON COMPUTER VISION, ECCV 2012; [LECTURE NOTES IN COMPUTER SCIENCE], SPRINGER BERLIN HEIDELBERG, BERLIN GERMANY, PAGE(S) 193 - 209, XP047527065, ISSN: 0302-9743 ISBN: 978-3-642-36741-0 [retrieved on 2019-09-10] | 11 | |
| A | * abstract; figures 10.1 - 10.5 * * page 195, paragraph 3 - page 205, paragraph 2 * | 1-10, 12-15 | TECHNICAL FIELDS SEARCHED (IPC) G06N |

The present search report has been drawn up for all claims

| Place of search | Date of completion of the search | Examiner |
|---|---|---|
| The Hague | 3 August 2020 | Freitas, Arthur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)